# FASCICULE DE BREVET EUROPEEN

(11) **EP 0 534 816 B1**
(45) Date de publication et mention de la délivrance du brevet: **05.07.1995**
(21) Numéro de dépôt: 92402480.5
(22) Date de dépôt: 11.09.1992
(51) Int. Cl.: F16D 1/08

(54) **Dispositif de liaison en rotation de deux organes**
Vorrichtung zur drehbaren Verbindung zweier Elemente
Device for connecting two rotary organs

(30) Priorité: 25.09.1991 FR 9111802
(43) Date de publication de la demande: 31.03.1993
(73) Titulaire: TURBOMECA, Société dite:, F-64511 Bordes (FR)
(72) Inventeur: Duboue, Jean, F-64510 Assat (FR)
(74) Mandataire: Barnay, André François

(56) Documents cités:
- GB-A- 540 713
- GB-A- 798 142
- GB-A- 2 101 708
- GB-A- 2 131 916

## Description

La présente invention concerne un dispositif de liaison en rotation de deux organes sensiblement coaxiaux.

L'invention concerne un dispositif du type comportant un arbre cannelé et un moyeu cannelé, reliés aux deux organes, des moyens d'immobilisation axiale relative de ces deux éléments cannelés.

L'invention concerne notamment un dispositif de liaison permettant d'assurer la transmission de puissance et le centrage géométrique entre deux organes tels que par exemple un arbre de puissance et une roue à aubes d'une turbomachine.

Parmi les dispositifs de liaison par cannelures, on distingue ceux dont les cannelures sont à flancs droits et ceux dont les cannelures sont à flancs en développantes.

Dans le cas des cannelures à flancs en développantes, les deux éléments cannelés mâle et femelle se centrent automatiquement l'un par rapport à l'autre sous l'effet du couple appliqué. On constate à l'usage que ce type de solution ne convient que pour des arbres tournant à des faibles vitesses de rotation mais qu'il n'est pas satisfaisant pour les grandes vitesses de rotation.

Le document GB-A-2.131.916 décrit et représente un dispositif de liaison en rotation selon le préambule de la revendication 1.

L'agencement proposé dans ce document est particulièrement complexe à réaliser dans la mesure où il est necéssaire de réaliser d'une part un pièce 12 comportant des cannelures internes et externes, une série de ces cannelures étant formée sur une surface conique externe, et dans la mesure où il est necéssaire de réaliser des cannelures dans une surface conique en creux de l'un des organes.

De plus, l'agencement décrit dans ce document nécessite de réaliser un filetage externe 14 sur l'un des organes 9.

Enfin, l'agencement décrit dans ce document ne peut pas être adapté de manière simple et économique pour la liaison en rotation de deux organes existants tels que par exemple en arbre de puissance et une roue à aubes d'une turbomachine.

La présente invention à pour but d'assurer de manière simple, dans un dispositif de liaison en rotation par cannelures, le centrage géométrique le plus précis possible de l'arbre par rapport au moyeu.

A cet effet, l'invention propose un dispositif de liaison du type mentionné précédement tel qu'il est défini à la partie caractérisante de la revendication 1.

Une autre autre caractéristique de l'invention, est définie à la seconde revendication.

D'autres aspects et avantages de l'invention apparaîtront à la lecture de la description détaillée que va suivre pour la compréhension de laquelle on se reportera au dessin annexé dans lequel :
- la figure 1 est une vue en coupe axiale d'un dispositif de liaison réalisé conformément aux enseignements de l'invention ;
- la figure 2 est une vue de détail à plus grande échelle d'une portion de la bague de centrage.

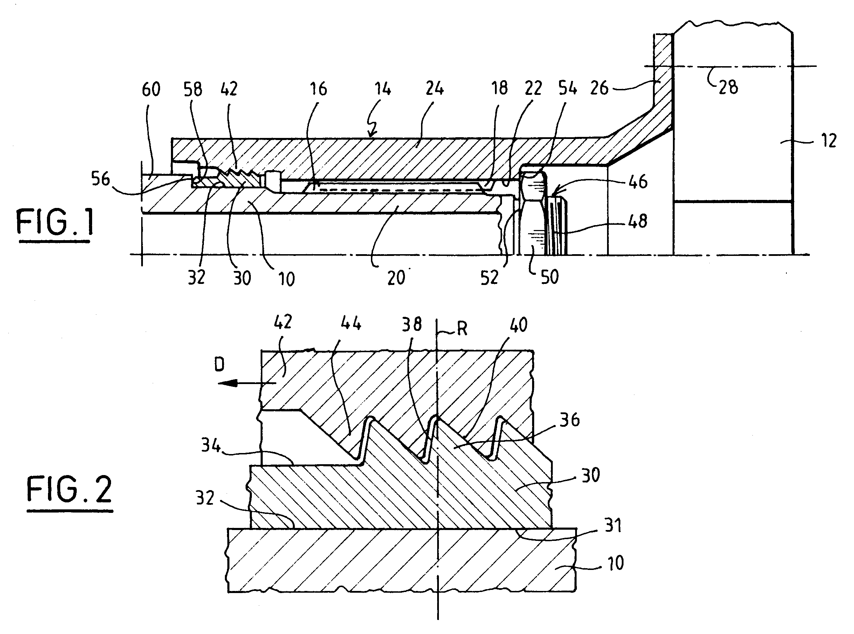

On a illustré à la figure 1 un arbre de transmission de puissance 10 qui est relié à un second organe 12 qui est par exemple le moyeu d'une roue à aubes (non représentées) d'une turbomachine.

Les organes 10 et 12 sont liés en rotation par un dispositif de liaison 14 ayant pour fonction d'assurer d'une part la transmission de puissance entre les deux organes 10 et 12, et d'autre part, le centrage géométrique le plus précis de ces deux organes afin d'assurer leur coaxialité.

La transmission du couple est assurée par un jeu de connelures mâle 16 et femelle 18 formées respectivement sur la surface externe de la portion d'extrémité 20 de l'arbre 10 et dans l'alésage interne 22 d'un moyeu cannelé 24 qui est relié à l'organe 12 par une bride radiale de fixation 26 et des liaisons filetées 28 illustrées de manière schématique à la figure 1.

La portion 20 de l'arbre 10 constitue donc un arbre cannelé 24 qui est reçu dans le moyeu cannelé 24.

Les cannelures 16 et 18 sont des cannelures complémentaires à flancs droits et pour lesquelles il subsiste un jeu radial normal.

Selon la caractéristique essentielle de l'invention, le centrage de l'arbre 10 par rapport au moyeu 24 est effectué au moyen d'une bague de centrage 30.

La bague de centrage 30 est montée sur une surface de portée cylindrique 32 située au voisinage d'une première extrémité, de gauche en considérant la figure 1, de la portion cannelée 20 de l'arbre 10.

La surface externe 34 de la bague de centrage 30 comporte un filetage 36 à flancs dissymétriques comme cela est illustré en détail à la figure 2.

On constate en effet à la figure 2, que le flanc de gauche 38 du filet extérieur 36 forme, par rapport au rayon R passant par le sommet du filet, un angle aigu nettement inférieur à celui que forme le flanc de droite 40.

La bague de centrage 30 est montée vissée dans une portion correspondante 42 du moyeu 24 qui comporte un taraudage 44 à flancs dissymétriques complémentaire du filetage extérieur 36.

Le taraudage 44 est formé dans un portion de l'alésage 22 dans une zone située en vis-à-vis de la bague 30.

La seconde extrémité 46 de la portion cannelée 20 de l'arbre 10, vers laquelle est orienté le flanc de droite 40 du filet 36, comporte un filetage extérieur 48 classique, c'est-à-dire dont les flancs sont symétriques, sur lequel est monté vissé un écrou de serrage axial 50 dont la face radiale de gauche 52 tournée vers la bague de centrage 30 prend appui axialement contre la face radiale en vis-à-vis 54 formée dans le moyeu 24.

La position axiale relative de la bague de centrage 30 par rapport à l'arbre cannelé 10 est définie par la coopération de sa face radiale d'extrémité 56 qui prend appui axialement contre la face radiale en vis-à-vis 58 formée par un épaulement radial estérieur 60 de l'arbre 10.

L'assemblage du dispositif de liaison que vient d'être décrit s'efectue de la manière suivante.

L'opérateur introduit l'arbre 10 équipé de sa bague de centrage 30 à l'intérieur du moyeu 24 de manière à emboîter les cannelures 16 et 18.

Il procède au serrage axial de l'ensemble à l'aide de l'écrou de serrage 50.

Lors de ce serrage, l'écrou 50 provoque un déplacement axial relatif du moyeu 24 par rapport à l'extrémité cannelé de l'arbre 10.

Le moyeu 24 se déplace ainsi dans la direction indiquée par la flèche D de la figure 2 par rapport à la bague de centrage 30.

Du fait de l'inclinaison importante du flanc 40 du filetage 36 il se produit, sous l'action de l'effort de serrage axial, un serrage radial de l'alésage interne 31 de la bague de centrage 30 sur la portée cylindrique 32 et donc ainsi un centrage quasiment parfait du moyeu 24 par rapport à l'arbre 10 au moyen de la bague 30.

Le dispositif selon l'invention permet donc d'assurer de manière très simple le positionnement géométrique le plus précis possible du moyeu 24 par rapport à l'arbre 10 et l'encastrement de l'arbre par rapport au moyeu sous l'effet du serrage axial appliqué au moyen de l'écrou 50.

L'illustration donnée aux figures 1 et 2 de l'invention est schématique et n'a pour but que d'illustrer de manière la plus simple possible le principe mis en oeuvre dans le cadre de l'invention.

Il est bien entendu évident que, par exemple, l'épaulement radial externe 60 doit être réalisé sous forme d'une pièce complémentaire si le diamètre de l'alésage interne 31 de la bague de centrage 30 est inférieur au diamètre extérieur des cannelures mâles 16.

L'ajustement entre l'alésage 31 et la portée cylindrique 32 doit être de préférence légèrement serré afin de garantir l'effet de serrage dû à la coopération des filetages dissymétriques 36 et 44 soit pleinement efficace lors du serrage de l'écrou 50.

L'invention n'est pas limité au mode de réalisation qui vient d'être décrit. De nombreuses variantes, et notamment des inversions mécaniques classiques, peuvent être envisagées pour la mise en oeuvre du principe de l'invention dans le cadre des revendications jointes.

## Revendications

1. Dispositif de liaison en rotation de deux organes sensiblement coaxiaux (10, 12), du type comportant un arbre cannelé (10, 20), un moyeu cannelé (24) et des moyens d'immobilisation axiale relative des deux éléments cannelés, et du type dans lequel une première extrémité de l'arbre cannelé (20) est équipée d'une bague de centrage (30) et la seconde extrémité (46) de l'arbre cannelé comporte un filetage extérieur (48) sur lequel est monté vissé un écrou de serrage axial (50), caractérisé en ce que la surface externe (34) de la bague de centrage comporte un filetage extérieur à flancs dissymétriques qui est monté vissé dans une portion correspondante (42) du moyeu cannelé, en ce que le flanc (40) du filet du filetage dissymétrique qui présente l'angle d'inclinaison le plus élevé par rapport au rayon (R) du filet est orienté du côté de la seconde extrémité (46) de l'arbre cannelé qui reçoit l'écrou, et en ce qu'une face radiale (52) de l'écrou (50) coopère avec une face radiale en vis-à-vis (54) du moyeu cannelé.

2. Dispositif de liaison en rotation selon la revendication 1, caractérisé en ce que ladite face radiale (52) de l'écrou est tournée vers ladite première extrémité de l'arbre cannelé, et en ce que la bague de centrage (30) comporte une face radiale d'appui (56) tournée vers ladite première extrémité et qui prend appui axialement contre une face radiale en vis-à-vis (58) de l'arbre cannelé (10).

## Claims

1. Arrangement for connecting together two substantially coaxial rotary members (10, 12) of the type comprising a splined shaft (10, 20), a splined hub (24) and means for relative axial location of the two splined elements, of the type in which a first end of the splined shaft (20) is provided with a locating or centring ring (30) and the second end (46) of the splined shaft has an external screw-thread (48) onto which is screwed an axial clamping nut (50), characterised in that the external surface (34) of the locating ring has an external screw-thread with asymmetrical flanks which is screwed into a corresponding portion (42) of the splined hub, in that the flank (40) on the asymmetrical screw-thread which has the steepest angle of inclination with respect to a radius (R) of the thread is orientated towards the second end (46) of the splined shaft which receives the nut, and in that a radial face (52) of the nut (50) co-operates with an opposing radial face (54) of the splined hub.

2. Rotary connecting arrangement according to claim 1, characterised in that the said radial face (52) of the nut faces towards the said first end of the splined shaft and that the locating ring (30) has a radial engaging face (56) which faces towards the said first end and engages axially against an opposing radial face (58) of the splined shaft (10).

## Patentansprüche

1. Vorrichtung zur drehschlüssigen Verbindung von zwei im wesentlichen koaxialen Teilen (10, 12), mit einer Nutwelle (10, 20), einer Keilnabe (24) und Mitteln zur axialen gegenseitigen Feststellung der Nutwelle und der Keilnabe, wobei ein erstes Ende der Nutwelle (20) mit einem Zentrierring (30) versehen ist und das zweite Ende (46) der Nutwelle ein Außengewinde (48) trägt, auf das eine axiale Spannmutter (50) aufgeschraubt ist, dadurch gekennzeichnet, daß die äußere Fläche (34)des Zentrierrings ein äußeres Gewinde mit asymmetrischen Seitenflächen trägt, daß in einen korrespondierenden Bereich (42) der Keilnabe verschraubt eingefügt ist. und daß die Seitenfläche (40) des Gewindegangs des asymmetrischen Gewindes, die den stärker ansteigenden Neigungswinkel bezüglich des Radius R bildet, zur Seite des zweiten Endes (46) der Nutwelle hin gerichtet ist, das die Mutter aufnimmt, und daß eine radiale Fläche (52) der Mutter (50) mit einer gegenüberliegenden radialen Fläche der Keilnabe zusammenwirkt.

2. Vorrichtung zur drehschlüssigen Verbindung nach Anspruch 1, dadurch gekennzeichnet, daß die radiale Fläche (52) der Mutter gegen das erste Ende der Nutwelle gedreht ist, und daß der Zentrierring (30) eine radiale Stützfläche (56) trägt, die zum ersten Ende hin gewandt ist und die sich axial gegen eine gegenüberliegende radiale Fläche (58) der Nutwelle (10) abstützt.
